# EUROPÄISCHE PATENTSCHRIFT

(11) **EP 1 805 074 B1**
(45) Veröffentlichungstag und Bekanntmachung des Hinweises auf die Patenterteilung: **01.04.2009**
(21) Anmeldenummer: 05798163.1
(22) Anmeldetag: 05.10.2005
(51) Int. Cl.: B62D 5/00

(54) **KRAFTFAHRZEUGLENKUNG, WELCHE EIN ÜBERLAGERUNGSGETRIEBE MIT EINER TAUMELEINHEIT AUFWEIST**
MOTOR VEHICLE STEERING SYSTEM COMPRISING A DIFFERENTIAL DRIVE PROVIDED WITH A SWASH UNIT
SYSTEME DE DIRECTION D'UN VEHICULE AUTOMOBILE PRESENTANT UNE BOITE DE SUPERPOSITION DOTEE D'UNE UNITE OSCILLANTE

(30) Priorität: 29.10.2004 DE 102004052562
(43) Veröffentlichungstag der Anmeldung: 11.07.2007
(73) Patentinhaber: ThyssenKrupp Automotive AG, 44793 Bochum (DE)
(72) Erfinder: ARBANAS, Viktor, CH-5400 Baden (CH)
(74) Vertreter: Adams, Steffen
(86) Internationale Anmeldenummer: PCT/EP2005/010715
(87) Internationale Veröffentlichungsnummer: WO 2006/048095

(56) Entgegenhaltungen:
- DE-A1- 19 823 721
- US-B1- 6 440 029
- PATENT ABSTRACTS OF JAPAN Bd. 2003, Nr. 12, 5. Dezember 2003 (2003-12-05) -& JP 2004 026022 A (TOYODA MACH WORKS LTD; TOYOTA MOTOR CORP), 29. Januar 2004 (2004-01-29)

## Beschreibung

Die Erfindung betrifft eine Kraftfahrzeuglenkung mit Überlagerungsgetriebe nach den Oberbegriffen der Patentansprüche 1 und 2.

Derartige Kraftfahrzeuglenkungen mit Überlagenrngsgetriebe werden bei modernen Lenksystemen für nicht spurgebundene Kraftfahrzeuge verwendet. Der elektromagnetische Hilfsantrieb, der bei derartigen Überlagerungsgetrieben vorgesehen ist, dient dazu, die durch den Hilfsantrieb hervorgerufenen Drehungen des Überlagerungsgetriebes den durch die Bedienperson am Steuerrad (Lenkrad) vorgenommenen Steuereingriffen zu überlagern. Auf diese Weise wird die Relation der Verdrehgeschwindigkeit der Fahrzeugräder im Vergleich zur Verdrehgeschwindigkeit des Steuerrades einstellbar und kann der jeweiligen Fahrsituation angepasst werden. So sollen beispielsweise beim Einparken bereits geringe Winkeländerungen am Steuerrad zu großen Winkelverschwenkungen an den Rädern führen, während bei schneller Autobahnfahrt selbst größere Winkeländerungen am Steuerrad nur zu geringen Winkelverschwenkungen an den Rädern führen sollen. Unter Umständen soll sogar ein automatisiertes Einparken ohne Verdrehung des Steuerrades ermöglicht werden. Gleichzeitig kann auf diese Weise über den Hilfsantrieb z.B. korrigierend auf fehlerhafte oder zu heftige Lenkbewegungen des Fahrzeugführers eingewirkt werden. Solche korrekturbedürftigen Lenkbewegungen können beispielsweise bei Überreaktionen des Fahrers in Gefahrsituationen auftreten.

Eine Kraftfahrzeuglenkung gemäß dem Oberbegriff des Patentanspruchs 1 ist aus der DE 198 23 721 A1 bekannt. Bei dieser bekannten Kraftfahrzeuglenkung wird über ein Fahrzeuglenkrad eine obere Lenkwelle und über diese ein Gehäuse angetrieben, in dem sich Verzahnungen eines Hohlrades zweier Planetengetriebe befinden. Die beiden Planetengetriebe sind in axialer Richtung hintereinander angeordnet. Ein in dem Gehäuse angeordneter Elektromotor treibt das Sonnenrad des ersten Planetengetriebes an. Der Planetenträger des ersten Planetengetriebes treibt das Sonnenrad des zweiten Planetengetriebes an. Die Planeten des zweiten Planetengetriebes stützen sich am Hohlrad des Gehäuses ab und der Planetenträger ist mit der Ausgangswelle (untere Lenkwelle) verbunden. In der Ausführungsform gemäß DE 198 23 721 A1 ist der Antrieb des Sonnenrades des ersten Planetengetriebes direkt durch den Rotor eines Elektromotors realisiert. Durch eine entsprechende Ansteuerung des Elektromotors können die gewünschten Drehzahlübersetzungen dargestellt werden.

Diese bekannte Lösung weist einige entscheidende Nachteile auf. Das Überlagerungsgetriebe besteht aus einer Vielzahl von einzelnen Bauteilen. Die Herstellung der Einzelbauteile ist sehr aufwendig und teuer. Außerdem führt die Vielzahl der bei diesen Überlagerungsgetrieben vorhandenen Zahneingriffe zu vergleichsweise hohen Genauigkeitsanforderungen bei der Herstellung der Getriebeteile und deren Zusammenbau, um unerwünschte Spiele in den Verzahnungen zu vermeiden.

Der Erfindung liegt die Aufgabe zugrunde, eine Kraftfahrzeuglenkung mit Überfagerungsgetriebe zur Verfügung zu stellen, bei der das Überlagerungsgetriebe einfach aufgebaut ist und die Herstellung der einzelnen Getriebebauteile mit geringem Aufwand, mit relativ geringen Genauigkeitsanforderungen und kostengünstig erfolgen kann.

Diese Aufgabe wird gelöst durch eine Kraftfahrzeuglenkung mit Überlagerungsgetriebe, wobei das Überlagerungsgetriebe eine Trägerstruktur (12, 33), eine Antriebswelle (3) mit einem dem Überlagerungsgetriebe zugewandten Wellenende (3a), eine Abtriebseinheit (2) mit einem dem Überlagenrngsgetriebe zugewandten Wellenende (2a) und einen einen Stator (4) und einen Rotor (6) aufweisenden Hilfsantrieb umfasst, dadurch gekennzeichnet, dass
- das Wellenende (3a) der Antriebswelle (3) eine drehfest mit der Antriebswelle (3) verbundene erste Zahnscheibe (7) trägt,
- das Wellenende (2a) der Abtriebseinheit (2) drehfest mit mindestens Teilen der Trägerstruktur (12, 33) verbunden ist,
- die Trägerstruktur (12, 33) eine drehfest mit dieser verbundene zweite Zahnscheibe (8) trägt, und
- der Rotor (6) einen ersten zylindrischen Abschnitt (6a) und einen zweiten, gegenüber dem ersten Abschnitt (6a) um einen Winkel (α) abgewinkelten zweiten zylindrischen Abschnitt (6b) aufweist, wobei der erste Abschnitt (6a) der Abtriebseinheit (2) und der zweite Abschnitt (6b) der Antriebswelle (3) zugewandt ist und wobei auf dem abgewinkelten zweiten Abschnitt (6b) eine auf diesem gelagerte Taumeleinheit (9a, 9b) angeordnet ist, welche die beiden Zahnscheiben (7, 8) miteinander trieblich koppelt.

Diese Aufgabe wird auch gelöst durch eine Kraftfahrzeuglenkung mit Überlagerungsgetriebe, wobei das Überlagerungsgetriebe eine Trägerstruktur (12, 33), eine Abtriebswelle (3) mit einem dem Überlagerungsgetriebe zugewandten Wellenende (3a), eine Antriebseinheit (2) mit einem dem Überlagenrngsgetriebe zugewandten Wellenende (2a) und einen einen Stator (4) und einen Rotor (6) aufweisenden Hilfsantrieb umfasst, dadurch gekennzeichnet, dass
- das Wellenende (3a) der Abtriebseinheit (3) eine drehfest mit der Abtriebseinheit (3) verbundene erste Zahnscheibe (7) trägt,
- das Wellenende (2a) der Antriebswelle (2) drehfest mit mindestens Teilen der Trägerstruktur (12, 33) verbunden ist,
- die Trägerstruktur (12, 33) eine drehfest mit dieser verbundene zweite Zahnscheibe (8) trägt, und
- der Rotor (6) einen ersten zylindrischen Abschnitt (6a) und einen zweiten, gegenüber dem ersten Abschnitt (6a) um einen Winkel (α) abgewinkelten zweiten zylindrischen Abschnitt (6b) aufweist, wobei der erste Abschnitt (6a) der Antriebswelle (2) und der zweite Abschnitt (6b) der Abtriebseinheit (3) zugewandt ist und wobei auf dem abgewinkelten zweiten Abschnitt (6b) eine auf diesem gelagerte Taumeleinheit (9a, 9b) angeordnet ist, welche die beiden Zahnscheiben (7, 8) miteinander trieblich koppelt.

In den Unteransprüchen 3 bis 9 sind vorteilhafte Weiterbildungen der Erfindung beschrieben.

Bei der Erfindung ist eine Taumeleinheit zwischen den beiden einander gegenüber liegenden und einander zugewandten Verzahnungen der beiden Zahnscheiben angeordnet. Die beiden Zahnscheiben weisen eine unterschiedliche Zähnezahl auf, sodass nach einer Umdrehung der Taumeleinheit die beiden Zahnscheiben um einen Winkel, der durch das Verhältnis der Zähnezahlen der beiden Zahnscheiben bestimmt wird, zueinander verdreht sind. Wird die erste Zahnscheibe, die mit der Antriebswelle drehfest verbunden ist, im Stillstand gehalten und gleichzeitig der Rotor des Hilfsantriebs in Rotation versetzt, so dreht sich die auf dem abgewinkelten Abschnitt des Rotors drehbar gelagerte Taumeleinheit und es verdreht sich die mit der Taumeleinheit im Verzahnungseingriff stehende zweite Zahnscheibe um eben diesen Winkel pro Umdrehung der Taumeleinheit. Daraus kann ein Übersetzungsverhältnis zwischen Drehzahl der Taumeleinheit und Drehzahl der Abtriebseinheit bestimmt werden, welches im Folgenden als Übersetzungsverhältnis des Taumelgetriebes bezeichnet wird.

Durch den konstruktiven Aufbau des erfindungsgemäßen Überlagerungsgetriebes wird erreicht, dass, solange der Hilfsantrieb nicht in Bewegung gesetzt bzw. blockiert ist, die Antriebsdrehzahl direkt über die erste Zahnscheibe, über die Taumeleinheit in die zweite Zahnscheibe und damit auf die Abtriebseinheit übertragen wird. Sobald der Hilfsantrieb die Taumeleinheit in Drehung versetzt, addieren sich die Drehzahlen der Antriebswelle und die, um das Übersetzungsverhältnis des Taumelgetriebes übersetzte, Rotordrehzahl.

Aus dem über entsprechende Sensoren erfassbaren Betriebszustand des Fahrzeuges, der z.B. durch Größen wie Geschwindigkeit, Straßenzustand, gewünschter Lenkeinschlag, Lenkwinkelbeschleunigung sowie weiteren Größen charakterisiert ist, kann ein Motormanagementsystem in an sich bekannter Weise Vorgaben für eine in der jeweiligen Fahrsituation geeignete Drehzahlübersetzung bestimmen und daraus Vorgaben für die Ansteuerung des Hilfsantriebes ableiten.

Vorzugsweise ist der Hilfsantrieb als Elektromotor ausgebildet. Als besonders geeignet hat sich als Elektromotor ein permanent erregter Synchronmotor erwiesen, bei dem der Stator mit den Erregerwicklungen fest mit dem Gehäuse des Überlagerungsgetriebes verbunden ist und der Rotor im Inneren des Stators koaxial zu diesem angeordnet ist. Anstelle eines Elektromotors können für den Hilfsantrieb auch andere Motoren verwendet werden. So kann bei dem erfindungsgemäßen Überlagerungsgetriebe der Hilfsantrieb auch durch einen hydraulischen oder pneumatischen Antrieb angetrieben werden. Beispielsweise kann der Hilfsantrieb als Orbitmotor oder als umgekehrte Flügelzellenpumpe ausgebildet sein.

In der bevorzugten Ausführungsform dreht sich der gesamte Hilfsantrieb, bevorzugt der Elektromotor, mit der Antriebswelle mit.

Die Erfindung bietet gegenüber dem eingangs dargestellten Stand der Technik (Kraftfahrzeuglenkung mit Planetenrad-Überlagerungsgetriebe) die wichtigen Vorteile, dass das Überlagerungsgetriebe aus deutlich weniger Bauteilen besteht und daher wesentlich einfacher aufgebaut ist. Außerdem sind die bei der Erfindung verwendeten Taumeleinheiten (Taumelscheiben, Taumelkegelräder) und die Zahnscheiben wesentlich einfacher herzustellen als die Zahnräder für Planetenradgetriebe bei den bekannten Überlagerungsgetrieben für Kraftfahrzeuglenkungen. Die Genauigkeitsanforderungen im Rahmen der Herstellung dieser Bauteile sind bei der Erfindung geringer als die Genauigkeitsanforderungen für die Zahnräder von Planetenradgetrieben, da bei der Erfindung die Toleranzkette für den gesamten Weg der Drehmomentenübertragung deutlich kürzer ist. Ein weiterer Vorteil der Erfindung besteht darin, dass die die Drehmomente übertragenden Getriebebauteile auf einfache Weise z.B. durch Schmieden (Warm- oder Kaltschmieden) oder als Sinterbauteile in Sintertechnik hergestellt werden können. Außerdem ist der Aufbau sehr kompakt und platzsparend.

Um im Fehlerfall oder in besonderen Fahrzeugsituationen - wie beispielsweise bei Stromausfall, Rechnerfehter oder bei ausgeschalteter Zündung usw. - eine direkte mechanische Kopplung zwischen Antriebswelle und Abtriebseinheit und damit die vollständige Kontrolle des Fahrers über das Lenksystem sicherzustellen, wird in das Übertagerun,gsgetriebe eine Sicherheitskupplung bzw. eine Sicherheitsschaltung integriert (Fail-Safe-Funktion). Die Kopplung kann beispielsweise in sehr einfacher Weise durch das Blockieren des Rotors des Hilfsantriebs in Bezug auf den Stator bzw. das Gehäuse des Überlagerungsgetriebes erfolgen.

Hinsichtlich der Anordnung des Überlagerungsgetriebes innerhalb eines erfindungsgemäßen Lenksystems gibt es verschiedene alternative Möglichkeiten. Zum einen kann das Überlagerungsgetriebe zwischen dem Lenkgetriebe und dem Lenkrad angeordnet werden. Ebenso ist es möglich, das Überlagerungsgetriebe zwischen dem Lenkgetriebe und den Spurstangen vorzusehen. Des Weiteren ist es möglich, das Überlagerungsgetriebe in das Lenkgetriebe zu integrieren. Welche Möglichkeit der Anordnung des Überlagerungsgetriebes innerhalb des Lenksystems ausgewählt wird, hängt u.a. von den jeweiligen Gegebenheiten hinsichtlich des Bauraums ab. Weitere technische und auch wirtschaftliche Erfordernisse können für die Auswahl der Anordnung des Überlagerungsgetriebes ausschlaggebend sein. Für den Fall, dass das Überlagerungsgetriebe zwischen Lenkgetriebe und Spurstange angeordnet ist oder in das Lenkgetriebe integriert ist, wird in der Regel die Abtriebseinheit direkt mit einem Umwandlungsgetriebe zur Übersetzung einer Drehbewegung in eine Translationsbewegung verbunden sein. Beispielsweise wird hier direkt eine Kugelgewindemutter eines Kugelspindeltriebes angetrieben.

Alternativ zu der koaxialen Anordnung von Stator und Rotor kann der Hilfsantrieb auch parallel zur Achse des Überlagerungsgetriebes angeordnet sein und über ein Stirnrad-, Schneckenrad-, Riemen- oder Kettengetriebe an das Übersetzungsgetriebe angekoppelt sein.

Die Erfindung wird nachfolgend anhand einer zwei unterschiedliche Ausführungsformen darstellenden Zeichnung näher erläutert. Im Einzelnen zeigen
- Fig. 1: eine Kraftfahrzeuglenkung mit einem Überlagerungsgetriebe gemäß Stand der Technik;
- Fig. 2: ein Überlagerungsgetriebe einer erfindungsgemäßen Kraftfahrzeuglenkung im axialen Halbschnitt in einer ersten Ausführungsform;
- Fig. 3: eine perspektivische Darstellung einer als doppelverzahnte Taumelscheibe ausgebildeten Taumeleinheit;
- Fig. 4: ein Überlagerungsgetriebe einer erfindungsgemäßen Kraftfahrzeuglenkung im axialen Halbschnitt in einer gegenüber Fig. 2 anderen Ausführungsform.

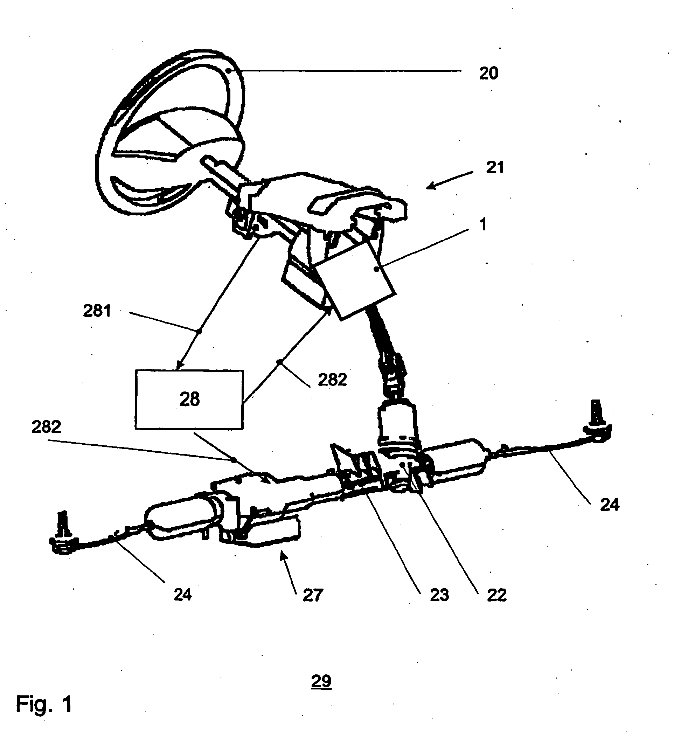

Der in Fig. 1 gezeigte schematische Aufbau einer Lenkvorrichtung 29 als Steer-bywire-Anordnung bzw. einer Lenkvorrichtung 29 mit elektrischer Hilfskraftunterstützung entspricht im Wesentlichen dem Stand der Technik. Die dargestellte Lenkvorrichtung umfasst u.a. ein Steuerrad 20, eine Lenksäule 21, ein Lenkgetriebe 22 und die beiden Spurstangen 24. Die Spurstangen 24 werden durch die Zahnstange 23 angetrieben. Zur Drehzahlübersetzung dient das erfindungsgemäße Überlagerungsgetriebe 1 oder 27, je nachdem, an welcher Stelle der Übertragungskette vom Steuerrad zu den Spurstangen das Überlagerungsgetriebe angeordnet werden soll. Es ist auch möglich, das erfindungsgemäße Überlagerungsgetriebe in das Lenkgetriebe 22 zu integrieren. Diese Anordnung des Überlagerungsgetriebes ist in Fig. 1 nicht dargestellt.

Im Folgenden wird die Erfindung anhand einer Lenkung mit einem Oberlagerungsgetriebe näher erläutert, welches an dem in Fig. 1 mit dem Bezugszeichen 1 bezeichneten Ort angeordnet werden soll. Vorzugsweise ist das im Folgenden beschriebene Überlagerungsgetriebe daher zwischen dem Steuerrad 20 und dem Lenkgetriebe 22, beispielsweise an der in Fig. 1 mit dem Bezugszeichen 1 gekennzeichneten Stelle angeordnet.

In dieser bevorzugten Anordnung des Überlagerungsgetriebes sind die vom Steuerrad 20 getriebene Antriebswelle 3 und die das Lenkritzel des Lenkgetriebes 22 treibende Abtriebswelle 2 koaxial zueinander angeordnet, wobei das Ende 3a der Antriebswelle 3 und das Ende 2a der Abtriebswelle 2 in einem Abstand zueinander gegenüberliegend auf ihrer gemeinsamen Rotationsachse angeordnet sind.

Im Normalfall wird die vom Fahrer gewünschte Lenkbewegung durch das Steuer rad 20 über eine in Fig. 1 nicht gezeigte Sensorik als Signal 281 in ein Steuergerät 28 eingespeist. Im Steuergerät 28 wird daraus, ggf. unter Zuhilfenahme eines Sensorsignals des Hilfsantriebs des Lenksystems (hier nicht dargestellt) und/oder des Überlagerungsgetriebes und weiterer den Fahrzeugzustand beschreibender Signale, die entsprechende Steuerspannung 282 für den Elektromotor des Überlagerungsgetriebes bestimmt und an diesen ausgegeben.

Bei der Erfindung kann das Lenksystem, in das das Überlagerungsgetriebe eingebaut wird, mit oder ohne Lenkhilfskraftunterstützung ausgelegt sein. Ist eine Lenkhilfskraftunterstützung vorgesehen, so ist es unerheblich, ob diese hydraulisch, pneumatisch oder elektrisch erfolgt.

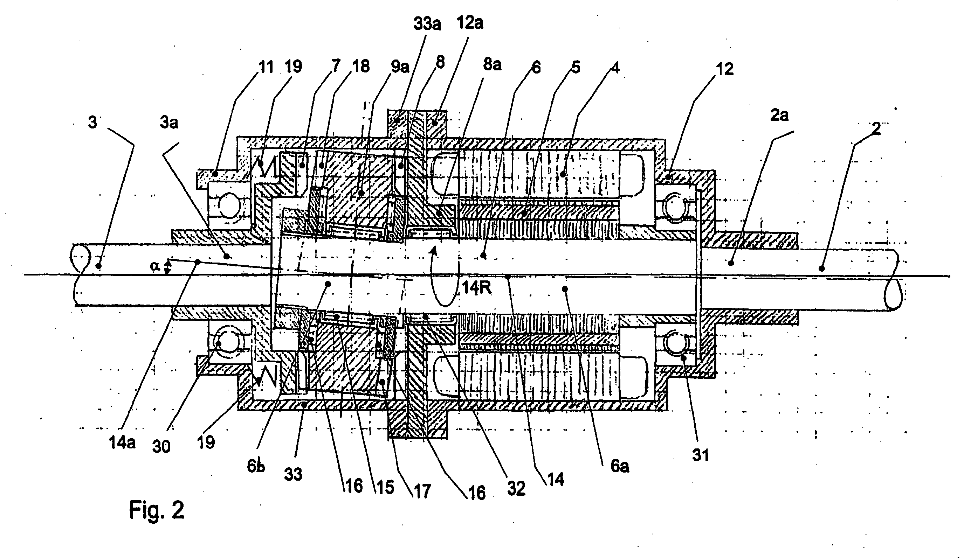

In Fig. 2 ist eine erste Ausführungsform des erfindungsgemäßen Überlagerungsgetriebes im axialen Halbschnitt dargestellt. Das aus zwei Gehäusehälften 33, 12 bestehende Gehäuse umschließt einen Hilfsantrieb, der aus einem Stator 4 und einem Rotor 6 besteht. Der Stator 4 ist mit dem Gehäuse bzw. der Gehäusehälfte 12 drehfest verbunden. In die Gehäusehälfte 33 ragt das Wellenende 3a der Antriebswelle 3 hinein. Auf dem Wellenende 3a ist eine Zahnscheibe 7 drehfest angeordnet. Über einen hülsenförmigen axialen Fortsatz der Zahnscheibe 7, welcher koaxial zum Wellenende 3a angeordnet ist, ist die Antriebswelle 3 zusammen mit der Zahnscheibe 7 über ein Wälzlager 30 drehbar gegenüber dem Gehäuse 33, 12 gelagert. Die Zahnscheibe 7 weist an ihrem Umfang eine vom Wellenende 3a wegweisende und einer Taumelscheibe 9a zugewandte Verzahnung auf.

Koaxial zur Antriebswelle 3 ist eine Abtriebseinheit mit einer Abtriebswelle 2 angeordnet, welche verdrehfest mit dem Gehäuse bzw. der Gehäusehälfte 12 verbunden ist. Die Gehäusehälften 33, 12 weisen an ihren einander zugewandten Enden sich in radialer Richtung erstreckende Flansche 33a, 12a auf. Zwischen diesen Flanschen 33a, 12a und mit diesen kraft- und/oder formschlüssig und/oder stoffschlüssig verbunden ist eine zweite Zahnscheibe 8 angeordnet. Die zweite Zahnscheibe 8 weist eine in Richtung auf das Wellenende 3a der Antriebswelle 3 und zur Taumelscheibe 9a hin gerichtete Verzahnung auf. In radialer Richtung erstreckt sich die zweite Zahnscheibe 8 bis zum zylindrischen Abschnitt 6a des Rotors 6 hin. An ihrem dem Rotor 6 zugewandten Ende weist die zweite Zahnscheibe 8 einen axialen Flansch 8a auf. Zwischen diesem Flansch 8a und dem zylindrischen Abschnitt 6a des Rotors 6 ist ein Nadellager 32 angeordnet. An dem dem Wellenende 2a der Abtriebswelle 2 zugewandten Ende des Rotors 6 ist ein Wälzlager 31 angeordnet. Über das Wälzlager 31 und das Nadellager 32 ist der Rotor 6 relativ zum Gehäuse und relativ zur Zahnscheibe 8 drehbar gelagert.

Es ist dabei offensichtlich, dass axialer Flansch 8a der Zahnscheibe 8 und Zahnscheibe 8 auch als separate Bauteile gefertigt und anschließend verbunden werden können.

An dem der Antriebswelle 3 zugewandten Ende des Rotors 6 ist ein zweiter zylindrischer Abschnitt 6b des Rotors vorhanden, welcher gegenüber dem ersten zylindrischen Abschnitt 6a um einen Winkel α abgewinkelt ist (Taumelwinkel α) und die Taumelachse 14a bildet. Auf diesem zweiten Abschnitt 6b ist eine Taumelscheibe 9a angeordnet, welche zwei umlaufende Verzahnungen 17, 18 aufweist. Durch diese Anordnung der Taumelscheibe 9a auf dem abgewinkelten Abschnitt 6b des Rotors 6 kommen die Verzahnungen 17, 18 der Taumelscheibe 9a am Umfang an einander gegenüber liegenden Seiten mit der ersten Zahnscheibe 7 und der zweiten Zahnscheibe 8 in Eingriff. Auf diese Weise sind die Zahnscheiben 7, 8 über die Taumelscheibe 9a trieblich miteinander gekoppelt.

Mit dem Gehäuse 12 ist der Stator 4 eines Elektromotors, welcher die Drehzahlübersetzung bewirkt, drehfest verbunden. Der Elektromotor ist bevorzugt mittels Permanentmagneten 5 erregt. Der Rotor 6 des Elektromotors steuert die Taumelscheibe 9a an, die mit ihren Verzahnungen 17, 18 die Kraftübertragung zwischen den beiden Zahnscheiben 7, 8 der Antriebswelle 3 und der Abtriebswelle 2 vermittelt. Der Zahneingriff der Taumelscheibe 9a am Umfang wechselt je nach Drehwinkel des Rotors 6.

Die Taumelscheibe 9a ist auf dem abgewinkelten Abschnitt 6b des Rotors 6 über Rollen bzw. ein Nadellager 15 drehbar gelagert. Aufgrund der Anordnung der Taumelscheibe 9a auf dem abgewinkelten Abschnitt 6b des Rotors 6 kommt es, wenn der Rotor 6 in Rotation versetzt wird, zu einer Verdrehung der Taumelscheibe 9a. Wird der Rotor 6 beispielsweise in Richtung des Pfeiles 14R gedreht, so dreht sich die Taumelscheibe 9a in die gleiche Richtung. Dabei wandert der Zahneingriff zwischen der zweiten Zahnscheibe 8 und der Verzahnung 17 der Taumelscheibe 9a in Umfangsrichtung in die Zeichenebene hinein.

Die erste Zahnscheibe 7 und die zweite Zahnscheibe 8 unterscheiden sich hinsichtlich ihrer Zähnezahl voneinander. Dadurch wird erreicht, dass sich die eine Zahnscheibe aufgrund der Drehung der Taumelscheibe 9a schneller dreht als die andere Zahnscheibe, sodass die für derartige Taumelgetriebe typischen hohen Übersetzungsverhältnisse erreicht werden.

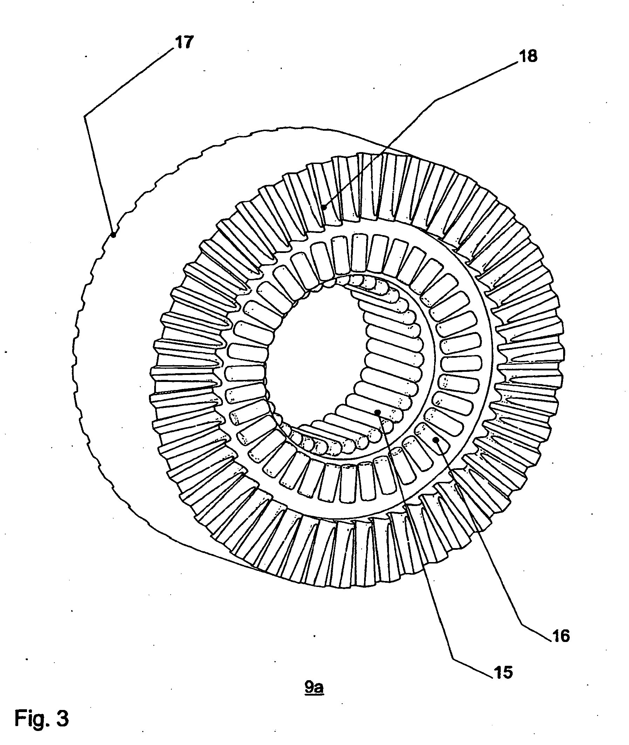

In Fig. 3 ist die Taumelscheibe 9a als Einzelteil in perspektivischer Darstellung gezeigt. Die Taumelscheibe 9a weist an ihrem Umfang zwei einander in axialer Richtung gegenüber liegende Verzahnungen 17, 18 auf, die im Einsatzfall, wie in Fig. 2 gezeigt, im Eingriff stehen mit den einander gegenüber liegenden Zahnscheiben 7, 8. Über die Rollen 15, die am Innenurnfang der Taumelscheibe 9a vorgesehen sind, ist diese drehbar auf dem abgewinkelten Abschnitt 6b des Rotors 6 gelagert (vgl. Fig. 2). Auch auf der Umfangsfläche der Taumelscheibe 9a sind Rollen 16 vorhanden, die eine freie Drehbarkeit der Taumelscheibe 9a auf dem abgewinkelten Abschnitt 6b des Rotors 6 gewährleisten.

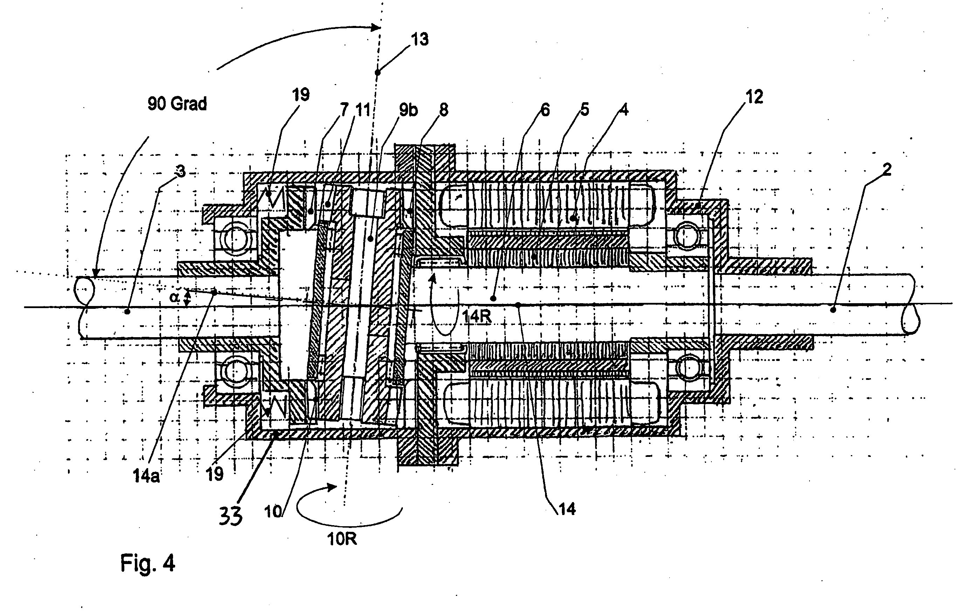

In Fig. 4 ist eine gegenüber der Fig. 2 abgewandelte Ausführungsform der Erfindung dargestellt. Diese zweite Ausführungsform der Erfindung gemäß Fig. 4 unterscheidet sich von der ersten Ausführungsform gemäß Fig. 2 nur in wenigen Punkten. Hier ist die Taumeleinheit 9b durch zwei als Taumelkegelräder 10, 11 ausgebildete Zahnräder gebildet. Dabei greift die Verzahnung des ersten Taumelkegelrades 10 in die erste Zahnscheibe 7 ein. Das zweite Taumelkegelrad 11 greift in die zweite Zahnscheibe 8. Die beiden Taumelkegelräder 10, 11 sind drehfest zueinander angeordnet und gemeinsam auf dem abgewinkelten Abschnitt 6b des Rotors 6 gelagert.

Wird die Antriebswelle 3 starr gehalten und der Rotor 6 in Drehrichtung des Pfeiles 14R in Drehung versetzt, so drehen sich die Taumelkegelräder 10 und 11 ebenfalls um ihre eigene Längsachse 13, im Beispiel nach Fig. 4 in Drehrichtung des Pfeiles 10R. Die Längsachse 13 der drehfest miteinander verbundenen Taumelkegelräder 10, 11 ist dabei orthogonal zur Taumelachse 14a, d.h. der Achse, die um den Taumelwinkel zur Rotationsachse 14 des Rotors 6 abgewinkelt ist, ausgerichtet. Auch in dieser zweiten Ausführungsform wechseln durch die Drehung der Taumelkegelräder 10, 11 die Zahneingriffe mit den Zahnscheiben 7, 8 in Umfangsrichtung. Durch die unterschiedlichen Zähnezahlen von Zahnscheibe 7 und Zahnscheibe 8 wird eine ensprechende Übersetzung erreicht.

In beiden voranstehend dargestellten Ausführungsbeispielen spielt es prinzipiell keine Rolle, durch welche Zähnezahlverhältnisse die geforderte Drehzahlübersetzung erreicht wird. Es ist ebenso möglich, die Drehzahlübersetzung durch unterschiedliche Zähnezahlen der Taumelkegelräder 10, 11 (Fig. 4) bzw. durch unterschiedliche Taumelscheibenverzahnungen 17, 18 der Taumelscheibe 9a (Fig. 2) oder eine Kombination untertschiedlicher Zähnezahlen der trieblich gekoppelten verzahnten Elemente zu erreichen. Zur Auslegung können die dem Fachmann bekannten Methoden der Getriebe- und Verzahnungsauslegung herangezogen werden.

Es versteht sich, dass in allen Ausführungsformen die Verzahnungen der Zahnscheiben und/oder der Taumeleinheit mit Spezialverzahnungen, beispielsweise zur Erhöhung des Wirkungsgrades oder zur Verminderung von Geräuschen, ausgebildet werden können.

Diese Ausführungsformen der Überlagerungsgetriebe bieten noch weitere Vorteile und gestatten einen besonders einfachen Aufbau der Einrichtung. Insbesondere sind auch Spielausgleiche sehr einfach durch Federelemente 19, die die Verzahnungen tiefer in Eingriff bringen und halten, möglich. Dabei kann die Federung in Richtung des Taumelwinkels α oder in Richtung der axialen Translation entlang der gemeinsamen Drehachse von Antriebswelle 3 und Abtriebswelle 2, wie in Fig. 2 und 4 angedeutet, der beiden Zahnscheiben ausgelegt sein. Im Ergebnis werden die Verzahnungen zur Erreichung eines Spielausgleichs durch elastische oder federnde Elemente mit Vorspannung in Eingriff gehalten. Auch sind die Anforderungen an den Rundlauf der beiden Zahnscheiben geringer als bei den Zahnrädern, die bei den aus dem Stand der Technik bekannten Überlagerungsgetrieben verwendet werden, beispielsweise für ein Planetenradgetriebe. So können bei der Erfindung die Verzahnungspartner ohne oder mit nur geringer mechanischer Nachbearbeitung durch Schmieden oder Sintern hergestellt werden.

Weiterhin versteht es sich, dass die in den Ausführungsbeispielen gemäß Fig. 2 und 4 dargestellte Anordnung auch so abgeändert werden kann, dass die in den Fig. 2 und 4 als Antriebswelle bezeichnete Welle 3 die Abtriebsweile ist und die in den Fig. 2 und 4 als Abtriebswelle bezeichnete Welle 2 die Antriebswelle, d.h. die mit dem Steuerrad verbundene Welle ist. In diesem Fall sind die Zähnezahlen der Zahnscheiben und der Verzahnungen der Taumeleinheiten entsprechend anzupassen.

Weiter ist es offensichtlich, dass das Gehäuse 33, 12 auch eine anders geartete Trägerstruktur sein kann, die die Führung und Lagerung der entsprechenden gewährleistet. Diese Trägerstruktur bzw. das Gehäuse kann prinzipiell einteilig oder mehrteilig ausgebildet sein. Insbesondere ist es auch denkbar, die in den Beispielen gezeigte Trennebene des Gehäuses nicht orthogonal, sondern in Richtung zur Drehachse der Abtriebswelle 2 anzuordnen.

Wie in den unabhängigen Patentansprüchen durch den Begriff "Abtriebseinheit" zum Ausdruck gebracht wird, muss es sich bei diesem Bauteil nicht zwangsläufig um eine Abtriebswelle handeln. Denkbar ist auch, dass bei der Erfindung die Abtriebseinheit so ausgebildet ist, dass das Gehäuseteil 12 seine Drehbewegung unmittelbar in eine Translationsbewegung umwandeln kann. Dies kann z.B. durch einen Kugelspindeltrieb erfolgen, der durch die Gehäusehälfte 12 betätigt wird. Diese Ausführungsalternative ist insbesondere dann sinnvoll, wenn die Abtriebseinheit z.B. direkt mit den Spurstangen 24 der Lenkung gekoppelt ist.

### Bezugszeichenliste

- 1.: Überlagerungseinrichtung
- 2.: Abtriebswelle
- 2a: Wellenende
- 3.: Antriebswelle
- 3a: Wellenende
- 4.: Stator
- 5.: Permanentmagneten
- 6.: Rotor
- 6a: erster Zylinderabschnitt
- 6b: zweiter Zylinderabschnitt
- 7.: erste Zahnscheibe
- 8.: zweite Zahnscheibe
- 8a: axialer Flansch
- 9a: Taumelscheibe
- 9b: Taumelrad
- 10.: Taumelkegelrad
- 10R: Pfeil (Drehrichtung Taumelkegelrad)
- 11.: Taumelkegelrad
- 12.: Gehäuseteil
- 12a: Flansch
- 13.: Längsachse
- 14.: Längsachse, Statorachse
- 14a: Taumelachse
- 14R: Pfeil (Drehrichtung Rotor)
- 15.: Lagerung
- 16.: Lagerung
- 17.: Taumelradverzahnung
- 18.: Taumelradverzahnung
- 19.: Federelement
- 20.: Steuerrad
- 21.: Lenksäule
- 22.: Lenkgetriebe
- 23.: Zahnstange
- 24.: Spurstange
- 27.: Überlagerungseinrichtung
- 28.: Steuergerät
- 29.: Lenkvorrichtung
- 30.: Wälzlager
- 31.: Wälzlager
- 32.: Nadellager
- 33.: Gehäuseteil
- 33a: Flansch
- 281: Signal Fahrerwunsch
- 282: Steuerspannung Elektromotor
- α: Taumelwinkel

## Patentansprüche

1. Kraftfahrzeuglenkung mit Überlagerungsgetriebe, wobei das Überlagerungsgetriebe eine Trägerstruktur (12, 33), eine Antriebswelle (3) mit einem dem Übertagerungsgetriebe zugewandten Wellenende (3a), eine Abtriebseinheit (2) mit einem dem Überlagerungsgetriebe zugewandten Wellenende (2a) und einen einen Stator (4) und einen Rotor (6) aufweisenden Hilfsantrieb umfasst, **dadurch gekennzeichnet, dass**
• das Wellenende (3a) der Antriebswelle (3) eine drehfest mit der Antriebswelle (3) verbundene erste Zahnscheibe (7) trägt,
• das Wellenende (2a) der Abtriebseinheit (2) drehfest mit mindestens Teilen der Trägerstruktur (12, 33) verbunden ist,
• die Trägerstruktur (12, 33) eine drehfest mit dieser verbundene zweite Zahnscheibe (8) trägt, und
• der Rotor (6) einen ersten zylindrischen Abschnitt (6a) und einen zweiten, gegenüber dem ersten Abschnitt (6a) um einen Winkel (α) abgewinkelten zweiten zylindrischen Abschnitt (6b) aufweist, wobei der erste Abschnitt (6a) der Abtriebseinheit (2) und der zweite Abschnitt (6b) der Antriebswelle (3) zugewandt ist und wobei auf dem abgewinkelten zweiten Abschnitt (6b) eine auf diesem gelagerte Taumeleinheit (9a, 9b) angeordnet ist, welche die beiden Zahnscheiben (7, 8) miteinander trieblich koppelt.

2. Kraftfahrzeuglenkung mit Überlagerungsgetriebe, wobei das Überlagerungsgetriebe eine Trägerstruktur (12, 33), eine Abtriebswelle (3) mit einem dem Überlagerungsgetriebe zugewandten Wellenende (3a), eine Antriebseinheit (2) mit einem dem Überlagerungsgetriebe zugewandten Wellenende (2a) und einen einen Stator (4) und einen Rotor (6) aufweisenden Hilfsantrieb umfasst, **dadurch gekennzeichnet, dass**
• das Wellenende (3a) der Abtriebseinheit (3) eine drehfest mit der Abtriebseinheit (3) verbundene erste Zahnscheibe (7) trägt,
• das Wellenende (2a) der Antriebswelle (2) drehfest mit mindestens Teilen der Trägerstruktur (12, 33) verbunden ist,
• die Trägerstruktur (12, 33) eine drehfest mit dieser verbundene zweite Zahnscheibe (8) trägt, und
• der Rotor (6) einen ersten zylindrischen Abschnitt (6a) und einen zweiten, gegenüber dem ersten Abschnitt (6a) um einen Winkel (α) abgewinkelten zweiten zylindrischen Abschnitt (6b) aufweist, wobei der erste Abschnitt (6a) der Antriebswelle (2) und der zweite Abschnitt (6b) der Abtriebseinheit (3) zugewandt ist und wobei auf dem abgewinkelten zweiten Abschnitt (6b) eine auf diesem gelagerte Taumeleinheit (9a, 9b) angeordnet ist, welche die beiden Zahnscheiben (7, 8) miteinander trieblich koppelt.

3. Kraftfahrzeuglenkung nach einem der Ansprüche 1 oder 2, **dadurch gekennzeichnet, dass** die Trägerstruktur aus mindestens zwei Gehäuseteilen (12, 33) gebildet ist.

4. Kraftfahrzeuglenkung nach Anspruch 3, **dadurch gekennzeichnet, dass** die Gehäusehälften (33, 12) an ihren einander zugewandten Enden Flansche (33a, 12a) aufweisen und die zweite Zahnscheibe (8) in ihrem radialen Außenbereich mindestens mit dem Flansch (12a) der Gehäusehälfte (12) verdrehfest verbunden ist.

5. Kraftfahrzeuglenkung nach den Ansprüchen 3 oder 4, **dadurch gekennzeichnet, dass** die zweite Zahnscheibe (8) form- und/oder kraftschlüssig mit beiden Gehäusehälften (33, 12) verbunden ist.

6. Kraftfahrzeuglenkung nach den Ansprüchen 1 bis 5, **dadurch gekennzeichnet, dass** die Abtriebseinheit eine Abtriebswelle (2; 3) umfasst und die Antriebswelle (3; 2) und die Abtriebswelle (2; 3) zueinander koaxial angeordnet sind.

7. Kraftfahrzeuglenkung nach den Ansprüchen 1 bis 6, **dadurch gekennzeichnet, dass** die Taumeleinheit (9a) als Taumelscheibe mit einander axial gegenüber liegenden umlaufenden Verzahnungen (17, 18) ausgebildet ist, wobei die eine Verzahnung (17) mit der zweiten Zahnscheibe (8) und die andere Verzahnung (18) mit der ersten Zahnscheibe (7) im Eingriff steht.

8. Kraftfahrzeuglenkung nach den Ansprüchen 1 bis 6, **dadurch gekennzeichnet, dass** die Taumeleinheit (9b) zwei zueinander verdrehfeste Taumelkegelräder (10, 11) umfasst, die auf dem abgewinkelten zweiten Abschnitt (6b) des Rotors (6) drehbar gelagert sind, wobei die Verzahnung des der ersten Zahnscheibe (7) zugewandten Taumelkegelrades (10) mit der ersten Zahnscheibe (7) und die Verzahnung des der zweiten Zahnscheibe (8) zugewandten Taumelkegelrades (11) mit der zweiten Zahnscheibe (8) im Eingriff steht.

9. Kraftfahrzeuglenkung nach einem der voranstehenden Ansprüche, **dadurch gekennzeichnet, dass** zur Erreichung eines Spielausgleichs zwischen der Taumeleinheit (9a, 9b) und den Zahnscheiben (7, 8) elastische und/oder federnde Ausgleichselemente (19) vorhanden sind, durch die die Verzahnungen unter Vorspannung zueinander im Eingriff gehalten werden.

## Claims

1. Motor vehicle steering system with a differential drive, wherein the differential drive has a carrier structure (12, 33), a drive shaft (3) with a shaft end (3a) facing the differential drive, a driven unit (2) with a shaft end (2a) facing the differential drive, and an auxiliary drive comprising a stator (4) and a rotor (6), **characterized in that**
• the shaft end (3a) of the drive shaft (3) supports a first toothed disc (7) connected in a non-rotational manner to the drive shaft (3),
• the shaft end (2a) of the driven unit (2) is connected in a non-rotational manner to at least parts of the carrier structure (12, 33),
• the carrier structure (12, 33) supports a second toothed disc (8) connected thereto in a non-rotational manner, and
• the rotor (6) has a first cylindrical portion (6a) and a second second *[sic]* cylindrical portion (6b) bent by an angle (α) with respect to the first portion (6a), wherein the first portion (6a) faces the driven unit (2) and the second portion (6b) faces the drive shaft (3) and wherein disposed on the angled second portion (6b) is a swash unit (9a, 9b) mounted thereon which drivingly couples the two toothed discs (7, 8) to each other.

2. Motor vehicle steering system with a differential drive, wherein the differential drive has a carrier structure (12, 33), a driven shaft (3) with a shaft end (3a) facing the differential drive, a drive unit (2) with a shaft end (2a) facing the differential drive, and an auxiliary drive comprising a stator (4) and a rotor (6), **characterized in that**
• the shaft end (3a) of the driven shaft (3) supports a first toothed disc (7) connected in a non-rotational manner to the driven unit (3),
• the shaft end (2a) of the drive shaft (2) is connected in a non-rotational manner to at least parts of the carrier structure (12, 33),
• the carrier structure (12, 33) supports a second toothed disc (8) connected thereto in a non-rotational manner, and
• the rotor (6) has a first cylindrical portion (6a) and a second second *[sic]* cylindrical portion (6b) bent by an angle (α) with respect to the first portion (6a), wherein the first portion (6a) faces the drive shaft (2) and the second portion (6b) faces the driven unit (3) and wherein disposed on the angled second portion (6b) is a swash unit (9a, 9b) mounted thereon which drivingly couples the two toothed discs (7, 8) to each other.

3. Motor vehicle steering system as claimed in claim 1 or 2, **characterized in that** the carrier structure is formed from at least two housing parts (12, 33).

4. Motor vehicle steering system as claimed in claim 3, **characterized in that** the housing halves (33, 12) have flanges (33a, 12a) on their mutually facing ends and in its radial outer region the second toothed disc (8) is connected in a non-rotational manner at least to the flange (12a) of the housing half (12).

5. Motor vehicle steering system as claimed in claims 3 or 4, **characterized in that** the second toothed disc (8) is connected in a positive and/or no-positive manner to the two housing halves (33, 12).

6. Motor vehicle steering system as claimed in claims 1 to 5, **characterized in that** the driven unit has a driven shaft (2; 3) and the drive shaft (3; 2) and the driven shaft (2; 3) are disposed coaxially to each other.

7. Motor vehicle steering system as claimed in claims 1 to 6, **characterized in that** the swash unit (9a) is formed as a swash disc with peripheral sets of toothing (17, 18) lying axially opposite each other, wherein one set of toothing (17) is engaged with the second toothed disc (8) and the other set of toothing (18) is engaged with the first toothed disc (7).

8. Motor vehicle steering system as claimed in claims 1 to 6, **characterized in that** the swash unit (9b) has two swash bevel gears (10, 11) which are rotationally fixed with respect to each other and which are rotatably mounted on the angled second portion (6b) of the rotor (6), wherein the toothing of the swash bevel gear (10) facing the first toothed disc (7) is engaged with the first toothed disc (7) and the toothing of the swash bevel gear (11) facing the second toothed disc (8) is engaged with the second toothed disc (8).

9. Motor vehicle steering system as claimed in any one of the preceding claims, **characterized in that** in order to compensate for play between the swash unit (9a, 9b) and the toothed discs (7, 8) elastic and/or resilient compensation elements (19) are provided by means of which the sets of toothing are held in engagement with each other under pretensioning.

## Revendications

1. Direction de véhicule automobile avec une transmission superposée, la transmission superposée comprenant une structure de support (12, 33), un arbre moteur (3) avec un bout d'arbre (3a) orienté vers la transmission superposée, une unité de sortie (2) avec un bout d'arbre (2a) orienté vers la transmission superposée, et une commande auxiliaire, qui présente un stator (4) et un rotor (6), **caractérisée en ce que**
- le bout d'arbre (3a) de l'arbre moteur (3) porte un premier plateau denté (7), solidaire en rotation de l'arbre moteur (3),
- le bout d'arbre (2a) de l'unité de sortie (2) est solidaire en rotation au moins de parties de la structure de support (12, 33),
- la structure de support (12, 33) porte un deuxième plateau denté (8) qui est relié solidaire en rotation avec elle, et
- le rotor (6) présente une première section cylindrique (6a) et une deuxième section cylindrique (6b) qui forme un angle (α) par rapport à la première section (6a), la première section (6a) étant orientée vers l'unité de sortie (2) et la deuxième section (6b) étant orientée vers l'arbre moteur (3), et une unité oscillante (9a, 9b), qui couple à entraînement les deux plateaux dentés (7, 8) l'un avec l'autre, étant montée sur la deuxième section (6b) qui forme un angle.

2. Direction de véhicule automobile avec une transmission superposée, la transmission superposée comprenant une structure de support (12, 33), un arbre de sortie (3) avec un bout d'arbre (3a) orienté vers la transmission superposée, une unité d'entrée (2) avec un bout d'arbre (2a) orienté vers la transmission superposée, et une commande auxiliaire, qui présente un stator (4) et un rotor (6), **caractérisée en ce que**
- le bout d'arbre (3a) de l'unité de sortie (3) porte un premier plateau denté (7), solidaire en rotation de l'arbre moteur (3)
- le bout d'arbre (2a) de l'arbre moteur (2) est solidaire en rotation d'au moins des parties de la structure de support (12, 33),
- la structure de support (12, 33) porte un deuxième plateau denté (8) qui est relié solidaire en rotation avec elle, et
- le rotor (6) présente une première section cylindrique (6a) et une deuxième section cylindrique (6b) qui forme un angle (α) par rapport à la première section (6a), la première section (6a) étant orientée vers l'arbre moteur (2) et la deuxième section (6b) étant orientée vers l'unité de sortie (3), et une unité oscillante (9a, 9b), qui couple à entraînement les deux plateaux dentés (7, 8) l'un avec l'autre, étant montée sur la deuxième section (6b) qui forme un angle.

3. Direction de véhicule automobile selon revendication 1 ou 2, **caractérisée en ce que** la structure de support est composée d'au moins deux parties de carter (12, 33).

4. Direction de véhicule automobile selon la revendication 3, **caractérisée en ce que** les moitiés de carter (33, 12) présentent des flasques (33a, 12a) à leurs extrémités orientées l'une vers l'autre, et que le deuxième plateau denté (8) est relié, solidaire en rotation, dans sa région extérieure, radiale, au moins au flasque (12a) de la moitié de carter (12).

5. Direction de véhicule automobile selon revendication 3 ou 4, **caractérisée en ce que** le deuxième plateau denté (8) est relié par emboîtement et / ou par friction aux deux moitiés de carter (33, 12).

6. Direction de véhicule automobile selon les revendications 1 à 5, **caractérisée en ce que** l'unité de sortie comprend un arbre de sortie (2; 3) et que l'arbre moteur (3 ; 2) et l'arbre de sortie (2; 3) sont disposés coaxialement l'un par rapport à l'autre.

7. Direction de véhicule automobile selon les revendications 1 à 6, **caractérisée en ce que** l'unité oscillante (9a) est conçue en tant que plateau oscillant avec des dentures (17, 18) périphériques, disposées à l'opposé l'une de l'autre, une denture (17) étant en prise avec le deuxième plateau denté (8) et l'autre denture (18) étant en prise avec le premier plateau denté (7).

8. Direction de véhicule automobile selon les revendications 1 à 6, **caractérisée en ce que** l'unité oscillante (9b) comprend deux roues coniques oscillantes (10, 11), résistantes à la torsion l'une par rapport à l'autre, qui sont montées en rotation sur la deuxième section (6b) du rotor (6),qui forme un angle, la denture de la roue conique oscillante (10), orientée vers le premier plateau denté (7) étant en prise avec le premier plateau denté (7) et la denture de roue conique oscillante (11), orientée vers le deuxième plateau denté (8) étant en prise avec le deuxième plateau denté (8).

9. Direction de véhicule automobile selon l'une des revendications précédentes, **caractérisée en ce que,** pour obtenir une compensation du jeu entre l'unité oscillante (9a, 9b) et les plateaux dentés (7, 8), sont prévus des éléments de compensation (19) élastiques et / ou faisant ressort, au moyen desquels les dentures sont maintenues engrenées entre elles sous précontrainte.
